Europäisches Patentamt

European Patent Office

Office européen des brevets

(11) Publication number: **0 505 883 A1**

# EUROPEAN PATENT APPLICATION

(21) Application number: **92104523.3**

(22) Date of filing: **16.03.92**

(51) Int. Cl.⁵: **C09J 153/00**

(30) Priority: **26.03.91 US 675245**

(43) Date of publication of application:
**30.09.92 Bulletin 92/40**

(84) Designated Contracting States:
**BE CH DE FR GB IT LI NL**

(71) Applicant: **National Starch and Chemical Investment Holding Corporation**
**501 Silverside Road**
**Wilmington, Delaware 19809(US)**

(72) Inventor: **Puletti, Paul P.**
**RR No. 3, Box 344, Hill Hollow Road**
**Pittstown, New Jersey 08867(US)**
Inventor: **Brady, Francis X.**
**4376 Hilltop Circle**
**Bethlehem, Pennsylvania 18017(US)**
Inventor: **Mooney, Mark T.**
**893 Robin Road**
**South Somerville, New Jersey 08876(US)**

(74) Representative: **Hagemann, Heinrich, Dr. et al**
**Patentanwälte Hagemann & Kehl Postfach**
**860329**
**W-8000 München 86(DE)**

(54) **Non-pigmented opaque hot melt adhesive.**

(57) A-B-A based hot melt adhesive compositions are opacified so as to enhance the visibility thereof during application in molten form by the addition thereto of a styrene polymer having a Ring and Ball softening point greater than 200°F; a relative molecular weight greater than 8,000 and a dispersity value greater than 15.

EP 0 505 883 A1

Hot melt adhesives are 100% solid materials which do not contain or require any solvents. They are solid materials at room temperature but, on application of heat, melt to a liquid or fluid state in which form they are applied to a substrate. on cooling, the adhesive regains its solid form and gains its cohesive strength. In this regard, hot melt adhesives differ from other types of adhesives which achieve the solid state through evaporation or removal of solvents or by polymerization.

Molten films of the hot melt adhesive compositions are usually clear. The clarity of these films results in an adhesive that is virtually transparent and is thus highly suitable for many applications. However, in certain instances there is a need for a material that produces an opaque film when molten. This allows greater visibility of the adhesive to facilitate application in high speed assembly techniques and also to ensure ease during inspection of the bonding process. More specifically, opacity in the molten state facilitates application adjustment by the end user so that operators of production equipment can quickly gauge visually if the proper amount of adhesive is being conveyed, deposited or transferred onto the substrate to be bonded.

Previously inorganic pigments such as titanium dioxide were blended with the hot melt components so as to provide opacity in the molten film. The use of such inorganic pigments often had detrimental effects on the adhesive's performance or caused thermal incompatibility characterized by physical phasing or separation occurring during prolonged heating, or settling out of the pigments which were not properly incorporated into the adhesive formulation. Moreover, these pigments are extremely abrasive to hot melt application and melting equipment, while the possibility of settling out of the pigment generally necessitates dedicated hot melt manufacturing equipment or extensive clean out by flushing to prevent cross-contamination of pigment into non-pigmented adhesives.

Hot melt adhesives based on A-B-A block copolymers are used in large quantities in a wide range of applications including bookbinding, disposable constructions and the like. It would be desirable for the reasons discussed above to provide an opaque hot melt based on these A-B-A polymers without the use of these undesirable abrasive pigments.

We have now found that A-B-A based hot melt adhesive compositions may be opacified without the use of inorganic pigments by the incorporation therein of specific high molecular weight, high softening point alpha-methyl styrene or polystyrene resins.

Thus, the present invention is directed to a method for specific hot melt adhesive compositions comprising A-B-A block copolymers, tackifiers, waxes and stabilizers and, optionally, plasticizers by incorporating therein 2 to 40% by weight of a pure alpha-methyl styrene resin or a high molecular weight polystyrene resin having a Ring and Ball softening point greater than 200°F.

The process of the present invention thus provides a non-pigmented hot melt adhesive composition which exhibits no adverse effects resulting from separation or phase-out of any inorganic pigment components.

The primary component of the adhesive compositions used in the present invention are block or multi-block copolymers having the general configuration:

A-B-A or A-B-A-B-A-B-

wherein the polymer blocks A are non-elastomeric polymer blocks which, as homopolymers have glass transition temperatures above 20°C., while the elastomeric polymer blocks B are isoprene or butadiene which may or may not be partially or substantially hydrogenated. The block copolymers may be linear or branched. Typical branched structures contain an elastomeric portion with at least three branches which can radiate out from a central hub or can be otherwise coupled together.

The non-elastomeric blocks which make up 14 to 86% by weight of the block copolymer may comprise homopolymers or copolymers or vinyl monomers such as vinyl arenes, vinyl pyridines, vinyl halides and vinyl carboxylates, as well as acrylic monomers such as acrylonitrile, methacrylonitrile, esters of acrylic acids, etc. Monovinyl aromatic hydrocarbons include particularly those of the benzene series such as styrene, vinyl toluene, vinyl xylene, ethyl vinyl benzene as well as dicyclic monovinyl compounds such as vinyl naphthalene and the like. Other non-elastomeric polymer blocks may be derived from alpha olefins, alkylene oxides, acetals, urethanes, etc. Styrene is preferred.

The elastomeric block component making up the remainder of the copolymers is isoprene or butadiene which may or may not be hydrogenated as taught, for example, in U.S. Pat. No. 3,700,633. This hydrogenation may be either partial or substantially complete. Selected conditions may be employed for example to hydrogenate the elastomeric block while not so modifying the vinyl arene polymer blocks. other conditions may be chosen to hydrogenate substantially uniformly along the polymer chain, both the elastomeric and non-elastomeric blocks thereof being hydrogenated to practically the same extent, which may be either partial or substantially complete.

Typical of the rubbery block copolymers useful herein are the polystyrene-polybutadiene-polystyrene, polystyrene-polyisoprene-polystyrene and e.g. polystyrene-poly-(ethylene-butylene)-polystyrene. The polystyrene - polybutadiene-polystyrene copolymers are preferred. The copolymers may be prepared using methods taught, for example, in U.S. Pat. Nos. 3,239,478; 3,427,269; 3,700,633; 3,753,936; and 3,932,327. Alternatively, some may be obtained from Shell Chemical Co. under the trademarks Kraton 1101, 1102, 1107, 1650, 1652, 1657 and D1122; and from Phillips Chemical Co. under the trademarks Solprene 418 and 423 or from Firestone under the tradename Stereon 840A. Blends of these copolymers with other compatible block copolymers may also be employed. The block copolymers are generally used at levels of 15 to 45%, preferably 20 to 35 by weight of the adhesive.

The tackifying resins useful in the adhesive compositions can be hydrocarbon resins, synthetic polyterpenes, rosin esters, natural terpenes, and the like. More particularly, the useful tackifying resins include any compatible resins or mixtures thereof such as (1) natural and modified resins such, for example, as gum rosin, wood rosin, taloil rosin, distilled rosin, hydrogenated rosin, dimerized rosin, and polymerized rosin; (2) glycerol and pentaerythritol esters of natural and modified rosins, such, for example as the glycerol ester of pale, wood rosin, the glycerol ester of hydrogenated rosin, the glycerol ester of polymerized rosin, the pentaerythritol ester of hydrogenated rosin, and the phenolicmodified pentaerythritol ester of rosin; (3) copolymers and terpolymers Of natured terpenes, e.g. styrene/terpene and alpha methyl styrene/terpene; (4) polyterpene resins having a softening point, as determined by ASTM method E28-58T, of from 80 to 150°C.; the latter polyterpene resins generally resulting from the polymerization of terpene hydrocarbons, such as the bicyclic mono-terpene known as pinene, in the presence of FriedelCrafts catalysts at moderately low temperatures; also included are the hydrogenated polyterpene resins; (5) phenolic modified terpene resins and hydrogenated derivatives thereof such, for example, as the resin product resulting from the condensation, in an acidic medium, of a bicyclic terpene and a phenol; (6) aliphatic petroleum hydrocarbon resins having a Ball and Ring softening point of from 70 to 135°C.; the latter resins resulting from the polymerization of monomers consisting primarily of olefins and diolefins; also included are the hydrogenated aliphatic petroleum hydrocarbon resins; (7) aromatic petroleum hydrocarbon resins and the hydrogenated derivatives thereof; and (8) alicyclic petroleum hydrocarbon resins and the hydrogenated derivatives thereof. Mixtures of two or more of the above described tackifying resins may be required for some formulations. The tackifiers are generally used at levels of 5 to 70% by weight of the adhesive composition.

The specific resins used to opacify the hot melt adhesives described herein are high molecular weight alpha-methyl styrene or polystyrene polymers having a Ring and Ball softening point (determined by ASTM Method E28) greater than 200°F. In selecting the opacifying resins for use herein, it is important to employ a resin having a relative molecular weight greater than about 8,000 as well as a dispersity value (relative molecular weight/relative molecular number) greater than about 15. For the purpose of calculating the relative molecular weight and the relative molecular number, the resins were compared to a series of polystyrene calibration standards available from Waters Multipore (Morristown, New Jersey) using the following procedure:

Equipment:     Waters Wisp Autosampler
Column:     PI Gel mixed, 10 min (linear column from Polymer Labs, Piscataway, New Jersey)
Mobile phase:     THF (stabilized with 250 ppm BHT) [Burdick and Jackson]
Flow note:     1 ml/min
Run time:     15 min
Detector:     SHIMADZU RID-6A (70 refractive index)
Standard:     Polystyrene (675K to 0.580K-linear calibration)

When a variety of polystyrene or alpha-methyl-styrene polymers were tested according to the above procedures, the results shown in Table I were obtained

TABLE I

|  | Relative MW | Relative MN | (MW/MN) Dispersity |
|---|---|---|---|
| Amoco 18-210[1] | 8,355 | 402 | 20.8 |
| Amoco 18-290[1] | 17,883 | 637 | 28.3 |
| Piccolastic D125[2] | 39,149 | 767 | 51.1 |
| Piccolastic D150[2] | 58,778 | 1505 | 39.2 |
| Endex 160[3] | 7,846 | 2650 | 3.0 |
| Piccotex 120[4] | 3,030 | 1178 | 2.6 |
| Kristalex 5140[5] | 4,975 | 1316 | 3.8 |

[1] Amoco 18-210 and 18-290 are linear homopolymers of alpha-methylstyrene having Ring and Ball melting points of 210 and 290° respectively.
[2] Piccolastic D125 and D150 are polymers of pure polystyrene monomer from Hercules.
[3] Endex 160 is a copolymer of pure aromatic monomers from Hercules.
[4] Piccotex 120 is a vinyl toluene-alpha methylstyrene copolymer from Hercules.
[5] Kristalex 5140 is a styrene-alpha methylstyrene copolymer from Hercules.

Thus, based on the results shown in Table I, suitable resins for use herein include the Amoco 18-210, 18-240 and 18-290 products as well as Hercules' Piccolastic D-125 and D-150. These resins are employed herein at levels of 2 to 40%, preferably 2 to 10%, by weight of the adhesive.

The waxes which are used in the adhesives of the invention in amounts of 10 to 40%, preferably 20 to 30%, by weight are the paraffin and micro-crystalline waxes such as low molecular weight polyethylene Fisher-Tropsch waxes.

Among the applicable stabilizers or antioxidants included herein are high molecular weight hindered phenols and multifunctional phenols such as sulfur and phosphorous-containing phenols. Hindered phenols are well known to those skilled in the art and may be characterized as phenolic compounds which also contain sterically bulky radicals in close proximity to the phenolic hydroxyl group thereof. In particular, tertiary butyl groups generally are substituted onto the benzene ring in at least one of the ortho positions relative to the phenolic hydroxy group. The presence of these sterically bulky substituted radicals in close proximity to the phenolic hydroxy group thereof. In particular, tertiary butyl groups generally are substituted onto the benzene ring in at least one of the ortho positions relative to the phenolic hydroxy group. The presence of these sterically bulky substituted radicals in the vicinity of the hydroxyl group serves to retard its stretching frequency and, correspondingly, its reactivity; this steric hindrance thus providing the phenolic compound with its stabilizing properties. Representative hindered phenols include: 1,3,5-trimethyl 2,4,6-tris (3,5-di-tert-butyl-4-hydroxybenzyl)benzene; pentaerythrityltetrakis-3(3,5-di-tert-butyl-4-hydroxyphenyl)-propionate;n-octadecyl-3(3,5-di-tert-butyl-4-hydroxyphenyl)-propionate; 4,41methylenebis (2,6-tert-butylphenol); 4,41-thiobis (6-tert-butyl-o-cresol); 2,6-di-tertbutylphenol; 6-(4-hydroxyphenoxy)-2,4-bis(n-octyl-thio)-1,3,5 triazine; di-n-octadecyl 32,5-di-tert-butyl-4-hydroxy-benzylphosphonate; 2-(n-octylthio)ethyl 3,5-di-tert-butyl-4-hydroxy-benzoate; and sorbitol hexa[3,5-di-tert-butyl-4-hydroxylphenyl)-propionate].

The performance of these antioxidants may be further enhanced by utilizing, in conjunction therewith known synergists such, for example, as thiodipropionate esters and phosphites, particularly useful is distearylthiodipropionate. These stabilizers are generally present in amounts of 0.1 to 1.5 weight percent, preferably 0.25 to 1.0%.

Various plasticizing or extending oils may be present in amounts less than about 10% by weight of the composition in order to impart fluidity in the molten condition of the adhesive and flexibility to the set adhesive, and/or to serve as wetting agents for bonding cellulosic fibers.

The adhesive compositions are prepared by blending the components in the melt at a temperature of 130-200°C. until a homogeneous blend is obtained, approximately 2 hours. Various methods of blending are known to the art and any method that produces a homogeneous blend is satisfactory.

Examples

In the examples presented in Tables II-IV the adhesive compositions are prepared by blending the components in the melt at a temperature of 130-200°C. until a homogeneous blend is obtained, approximately 2 hours. Various methods of blending are known to the art and any method that produces a homogeneous blend as satisfactory.

Test Procedures

The following procedures were utilized in testing the adhesives of Tables II-IV.

1. Viscosity measurements were determined using a Brookfield viscometer (Spindle 27) at 350°F.

2. Cold Flexibility - the molten mass was cast, by means of a heated Bird applicator, onto a polytetrafluorethylene-coated steel sheet yielding a film having a dry film thickness of 20 mils. After cooling, the film specimen was stripped from the plate and cut into 1/2 x 2 inch test specimens. A representative specimen was then placed in a temperature controlled, carbon dioxide cooled cabinet for a period of 5 minutes whereupon it was immediately flexed at a 180° angle. Where the specimen did not crack as a result of this procedure, a second identical specimen was placed in the cabinet at a lower temperature and the flexing procedure repeated. The temperature at which the specimen eventually cracked was thus viewed as its cold crack or "low temperature flexibility" value. Thus, as the latter value is decreased, there is a corresponding increase in the flexibility and stability which can be expected upon exposing these films and the books bound therewith to low temperature conditions. Two values are recorded, the lower being the value at which the cracking was observed, the higher being the closest value at which cracking did not occur.

3. Tensile strength - the tensile strength of a hot melt adhesive is determined on films cast from the hot melts according to Test Method A of ASTM procedure D 882-61T utilizing an Instron Tensile Tester, the films having been prepared according to the method set forth in the above described Film Cold Crack Test. The force required to start to stretch the specimen is recorded as "tensile break". This procedure also provides a measurement of % elongation, which is the percentage stretch of the hot melt film at the point of rupture in obtaining the ultimate tensile strength.

4. Thermal stability - the thermal stability of the adhesive formulations was determined in the following manner: 100 grams of adhesive was placed in a clean 8 ounce glass jar and covered with aluminum foil. The jars were then placed in a forced-draft oven at 350°F. and aged for 72 hours. After this time interval, the specimen was analyzed for phase separation. Phase separation would indicate a thermally incompatible system and would be undesirable in commercial operations.

## TABLE II

| | Control | 1 | 2 | 3 | 4 | 5 | 6 | 7 |
|---|---|---|---|---|---|---|---|---|
| Kraton D1122[1] | 36.5 | 36.5 | 36.5 | 36.5 | 36.5 | 36.5 | 36.5 | 36.5 |
| Norsolene 1080[2] | 25 | 25 | 25 | 25.0 | 25.0 | 25 | 25 | 25 |
| ECR149B[3] | 15 | 13 | 10 | 15.0 | 15.0 | 13.0 | 10.0 | 10.0 |
| Paraffin Wax | 23.5 | 23.5 | 23.5 | 23.5 | 23.5 | 23.5 | 23.5 | 23.5 |
| Antioxidant[4] | 1.0 | 1.0 | 1.0 | 1.0 | 1.0 | 1.0 | 1.0 | 1.0 |
| 18-290[5] | -- | 2.0 | 5.0 | 10.0 | 15.0 | -- | -- | -- |
| 18-210[6] | -- | -- | -- | -- | -- | 2.0 | 5.0 | -- |
| 18-240[7] | -- | -- | -- | -- | -- | -- | -- | 5.0 |
| Total Parts | 101 | 101 | 101 | 111 | 116 | 101 | 101 | -- |
| Opacity @ 350°F | Clear | Opaque | Opaque | Opaque | Opaque | Sl.Haze | Hazy | Opaque |
| Visc @ 350°F (cps) | 4450 | 4438 | 4875 | 5563 | 5500 | 4938 | 4975 | N/T |
| Tensile | | | | | | | | |
| Yield (psi) | 254 | 339 | 341 | 316 | 344 | 298 | 332 | |
| Break (psi) | 810 | 995 | 1178 | 1016 | 1010 | 1214 | 1169 | N/T |
| % Elongation | 1350 | 1575 | 1750 | 1200 | 1100 | 1633 | 1600 | |
| Cold Flexibility | | | | | | | | |
| Pass (°F) | -25 | -25 | -30 | -25 | -25 | -30 | -30 | |
| Fail (°F) | -30 | -30 | -35 | -30 | -30 | -35 | -35 | N/T |
| Thermal Stability | | | | | | | | |
| Separation | None | None | None | None | None | None | None | N/T |

(1)  A styrene butadiene radical block copolymer available from Shell Chemical Company.
(2)  A $C_9$ hydrocarbon tackifying resin from Sartomer.
(3)  A hydrogenated $C_5 - C_9$ tackifying resin from Exxon
(4)  Antioxidant = Irganox 1010 from Ciba-Geigy
(5)  An alpha-methyl styrene resin having a Ring and Ball softening point of 290°F available from Amoco.
(6)  An alpha-methyl styrene resin having a Ring and Ball softening point of 210°F available from Amoco.
(7)  An alpha-methyl styrene resin having a Ring and Ball softening point of 240°F available from Amoco.

N/T  Not Tested

EP 0 505 883 A1

TABLE III

|  | 8 | 9 | 10 | 11 |
|---|---|---|---|---|
| Kraton 1107[8] | 30 | 30 | -- | -- |
| Kraton G1652[9] |  |  | 30 | 30 |
| Wingtak 95[10] | 40 | 40 | 40 | 40 |
| Paraffin Wax | 25 | 25 | 25 | 25 |
| Antioxidant | 1.0 | 1.0 | 1.0 | 1.0 |
| 18-290 | 5.0 | -- | 5.0 | -- |
| Picolastic D-150[11] | -- | 5.0 | -- | 5.0 |
| Opacity @ 350°F | Opaque | Opaque | Opaque | Opaque |
| Viscosity @ 350°F | 4950 | 5250 | 6360 | 8200 |
| Thermal Stability Separation | None | None | None | None |

(8) A styrene isoprene styrene linear block copolymer from Shell Chemical Company.

(9) A styrene-ethylene-butylene styrene linear polymer from Shell Chemical Company.

(10) A $C_5$ aliphatic tackifying resin from Goodyear.

(11) A polystyrene polymer from Hercules having a 150°C Ring and Ball softening point.

TABLE IV

| | Control | 12 | 13 | 14 | 15 | 16 |
|---|---|---|---|---|---|---|
| Kraton D1122 | 36.5 | 36.5 | 36.5 | 36.5 | 36.5 | 36.5 |
| Norsolene 1080 | 25.0 | 25.0 | 25.0 | 25.0 | 25.0 | 25.0 |
| ECR149B | 15.0 | 10 | 10.0 | 10.0 | 10.0 | 10.0 |
| Paraffin Wax | 23.5 | 23.5 | 23.5 | 23.5 | 23.5 | 23.5 |
| Antioxidant | 1.0 | 1.0 | 1.0 | 1.0 | 1.0 | 1.0 |
| Kristalex 5140[12] | -- | 5.0 | -- | -- | -- | -- |
| Endex 160[13] | -- | -- | 5.0 | -- | -- | -- |
| Piccolastic D150 | -- | -- | -- | 5.0 | -- | -- |
| Piccolastic D125[14] | -- | -- | -- | -- | 5.0 | -- |
| Piccotex 120[15] | -- | -- | -- | -- | -- | 5.0 |
| Opacity @ 350°F | Clear | Clear | Clear | Opaque Cloudy | Opaque Cloudy | Clear |
| Thermal Stability Separation | None | N/T | N/T | None | None | N/T |

N/T - not tested

(12) A styrene alpha-methyl styrene copolymer from Hercules.

(13) A copolymer of pure aromatic monomers from Hercules.5
(14) A polystyrene polymer from Hercules having a Ring and Ball softening point of 125°C.
(15) A vinyl toluene alpha-methyl styrene copolymer from Hercules having a Ring and Ball softening point of 120°C.

As the results in Tables II-IV illustrate, only those hot melt adhesives prepared with polystyrene or alpha-methyl-styrene resins having high molecular weights and high dispersity values provided opacifying properties. Thus, the control adhesive which contained no opacifying resin, as well as adhesives 12, 13 and 16 containing Kristelex, Endex and Piccotex, (styrene containing polymers having lower molecular weights and diversity values as shown in Table I), were clear. In contrast, adhesives 1-7, 8-11, 14 and 15 formulated with the opacifying resins described herein and having relative molecular weights greater than 8,000 and dipersity values greater than 15 produced hazy or opaque hot melt compositions without the need for inorganic pigments or other conventional opacifiers.

**Claims**

8

1. A method for opacifying an A-B-A based hot melt adhesive composition so as to enhance the visibility thereof during application in molten form comprising the steps of blending

a) 15 to 45% of an A-B-A block or multiblock copolymer wherein the polymer blocks A are non-elastomeric polymer blocks which, as homopolymers have glass transition temperatures about 20°C., and the elastomeric polymer blocks B are isoprene or butadiene which may or may not be partially or substantially hydrogenated;

b) 5 to 70% of at least one compatible tackifying resin;

c) 2 to 40% of a high molecular weight polystyrene or alpha methyl styrene polymer having a Ring and Ball softening point greater than 200°F, a relative molecular weight greater than 8,000 and a dispersity value greater than 15;

d) 10 to 40% paraffin or micro-crystalline wax;

e) 0.1 to 1.5% stabilizer.

f) 0 to 30% plasticizing oil;

2. The method of claim 1 wherein the A-B-A block copolymer is polystyrene-polybutadiene-polystyrene and the tackifying resin is selected from the group consisting of natural and modified resins; glycerol and pentaerythritol esters of natural and modified rosins; copolymers and terpolymers of natured terpenes; polyterpene resins having a softening point, as determined by ASTM method E28-58T, of from about 80 to 150°C; phenolic modified terpene resins and hydrogenated derivatives thereof; aliphatic petroleum hydrocarbon resins having a Ball and Ring softening point of from about 70 to 135°C; aromatic petroleum hydrocarbon resins and the hydrogenated derivatives thereof; and alicyclic petroleum hydrocarbon resins and the hydrogenated derivatives thereof.

3. The method of Claim 1 wherein the high molecular weight polystyrene or alpha methylstyrene polymer is present in an amount of 2 to 10% by weight of the adhesive.

4. The method of Claim 1 wherein the wax is present in an amount of 20 to 30% by weight of the adhesive.

5. In a method for the production of hot melt adhesive compositions based on A-B-A block or multiblock copolymers, additionally containing at least one compatible tackifying resin, paraffin or micro-crystalline wax and optionally a plasticizing oil, the improvement which comprises adding thereto 2 to 40% by weight of a high molecular weight polystyrene or alpha methyl styrene polymer having a Ring and Ball softening point greater than 200°F, a relative molecular weight greater than 8,000 and a dispersity value greater than 15;

6. In a hot melt adhesive composition which is opaque in molten form comprising:

a) 15 to 45% of an A-B-A block or multiblock copolymer wherein the polymer blocks A are non-elastomeric polymer blocks which, as homopolymers have glass transition temperatures about 20°C., while the elastomeric polymer blocks B are isoprene or butadiene which may or may not be partially or substantially hydrogenated;

b) 5 to 70% of at least one compatible tackifying resin;

c) 10 to 40% paraffin or micro-crystalline wax;

d) 0.1 to 1.5% stabilizer; and

e) 0 to 30% plasticizing oil. the improvement which comprises adding thereto 2 to 40% of a high molecular weight polystyrene or alpha methyl styrene polymer having a Ring and Ball softening point greater than 200°F; a relative molecular weight greater than 8,000 and a dispersity value greater than 15.

7. The hot melt adhesive of Claim 6 wherein the A-B-A block copolymer is polystyrene-polybutadiene-polystyrene and the tackifying resin is selected from natural and modified resins; glycerol and pentaerythritol esters of natural and modified rosins; copolymers and terpolymers of natured terpenes; polyterpene resins having a softening point, as determined by ASTM method E28-58T, of from about 80 to 150°C; phenolic modified terpene resins and hydrogenated derivatives thereof; aliphatic petroleum hydrocarbon resins having a Ball and Ring softening point of from about 70 to 135°C; aromatic petroleum hydrocarbon resins and the hydrogenated derivatives thereof; and alicyclic petroleum hydrocarbon resins and the hydrogenated derivatives thereof.

8. The hot melt adhesvive of Claim 6 wherein the high molecular weight polystyrene or alpha methyl-styrene polymer is present in an amount of 2 to 10% by weight of the adhesive.

9. The hot melt adhesive of Claim 6 wherein the wax is present in an amount of 20 to 30% by weight of the adhesive.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 917 607 (R.K. CROSSLAND ET AL.)<br>* column 5, line 22 - line 25 *<br>* column 2, line 58 - line 60 *<br>* column 7, line 27 - column 8, line 2; claims 1-3; example 2 *<br>--- | 5-9 | C09J153/00 |
| X | US-A-4 032 492 (P.A. ENGLUND ET AL.)<br>* claims 1,3; examples 1,5 *<br>--- | 5-9 | |
| A | GB-A-2 115 823 (SHELL INTERNATIONAL RESEARCH MAATSCHAPPIJ BV)<br>* page 6, line 1 - line 24; examples 3,4 *<br>----- | 1,6 | |
| | | | TECHNICAL FIELDS SEARCHED (Int. Cl.5)<br><br>C09J |

The present search report has been drawn up for all claims

| Place of search | Date of completion of the search | Examiner |
|---|---|---|
| THE HAGUE | 08 JULY 1992 | FUHR C.K.B. |

EPO FORM 1503 03.82 (P0401)